# EUROPÄISCHE PATENTSCHRIFT

(11) **EP 3 963 231 B1**
(45) Veröffentlichungstag und Bekanntmachung des Hinweises auf die Patenterteilung: **31.07.2024**
(21) Anmeldenummer: 20722457.7
(22) Anmeldetag: 20.04.2020
(51) Int. Cl.: F16D 67/04, F16D 55/24, F16D 21/06, F16D 55/40, F16D 25/08

(54) **LAMELLENBREMSVORRICHTUNG SOWIE GETRIEBEANORDNUNG MIT DER LAMELLENBREMSVORRICHTUNG**
MULTI-PLATE BRAKE DEVICE AND TRANSMISSION ASSEMBLY HAVING THE MULTI-PLATE BRAKE DEVICE
DISPOSITIF DE FREIN À DISQUES MULTIPLES AINSI QU'ENSEMBLE DE TRANSMISSION COMPRENANT LE DISPOSITIF DE FREIN À DISQUES MULTIPLES

(30) Priorität: 03.05.2019 DE 102019111526
(43) Veröffentlichungstag der Anmeldung: 09.03.2022
(73) Patentinhaber: Schaeffler Technologies AG & Co. KG, 91074 Herzogenaurach (DE)
(72) Erfinder: JACKY, Michel, 67760 Gambsheim (FR); FRIETSCH, Frank, 77830 Bühlertal (DE); HEITBAUM, Markus, 77830 Bühlertal (DE)
(86) Internationale Anmeldenummer: PCT/DE2020/100320
(87) Internationale Veröffentlichungsnummer: WO 2020/224702

(56) Entgegenhaltungen:
- DE-A1- 10 040 116
- US-A1- 2018 340 251

## Beschreibung

Die Erfindung betrifft eine Lamellenbremsvorrichtung mit den Merkmalen des Oberbegriffs des Anspruchs 1. Des Weiteren betrifft die Erfindung eine Getriebeanordnung mit der Lamellenbremsvorrichtung.

Hybridantriebe oder elektrische Antriebe müssen Momentenwege ändern können, um zum einen Übersetzungen zu variieren und zum andern im Fall von Hybridantrieben das Zusammenführen oder das Abtrennen von Antriebsmomenten von einem Elektromotor und von einem Verbrennungsmotor umsetzen zu können.

Es ist dabei bekannt, dass in Getrieben Mehrfachkupplungen und/oder Mehrfachbremseinrichtungen eingesetzt werden.

Beispielsweise offenbart die Druckschrift WO 2018/103778 A1ein Kupplungs- und Bremssystem mit einem ein Reibelement und ein Bremselement aufnehmenden Reibelementträger sowie einen Antriebsstrang mit diesem System. Das System umfasst zwei Lamellenbremsen, wobei eine der Lamellenbremsen an einem Gehäuse angeordnet ist, welches zugleich mehrere Hydraulikzylinder ausbildet. Eine Lamellenbremsvorrichtung nach dem Oberbegriff des Anspruchs 1 ist in der DE 100 40 116 A1 offenbart. Weiterer Stand der Technik ist aus der US 2018/340251 A1 bekannt.

Der Erfindung liegt die Aufgabe zugrunde, eine Lamellenbremsvorrichtung zu schaffen, welche leicht ist und zugleich wirtschaftlich hergestellt werden kann.

Diese Aufgabe wird durch eine Lamellenbremsvorrichtung mit den Merkmalen des Anspruchs 1 und durch eine Getriebeanordnung mit den Merkmalen des Anspruchs 7 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Lamellenbremsvorrichtung, wobei die Lamellenbremsvorrichtung insbesondere für einen Hybridantrieb geeignet und/ausgebildet ist. Alternativ hierzu kann die Lamellenbremsvorrichtung auch für einen rein elektrischen Antrieb geeignet und/oder ausgebildet sein.

Die Lamellenbremsvorrichtung umfasst ein Hydraulikzylindergehäuse. Das Hydraulikzylindergehäuse weist mindestens einen integrierten ersten Hydraulikzylinderabschnitt auf. Insbesondere ist der Hydraulikzylinderabschnitt ausgebildet, so dass ein Hydraulikkolben in dem Hydraulikzylinderabschnitt bewegbar ist. Optional bildet der Hydraulikkolben einen Bestandteil der Lamellenbremsvorrichtung, wobei der Hydraulikkolben und der Hydraulikzylinderabschnitt gemeinsam einen ersten Nehmerzylinder zur Betätigung der Lamellenbremsvorrichtung bilden. Vorzugsweise sind in das Hydraulikzylindergehäuse mehrere Hydraulikzylinderabschnitte integriert.

Das Hydraulikzylindergehäuse ist aus einer Aluminiumlegierung ausgebildet. Beispielsweise ist das Hydraulikzylindergehäuse in einem Gussverfahren oder in einem Schmiedeverfahren hergestellt.

Ferner weist die Lamellenbremsvorrichtung einen Lamellenträger zur Aufnahme einer Mehrzahl von Lamellen auf. Insbesondere bildet die Mehrzahl von Lamellen ein Lamellenpaket. Optional bildet die Mehrzahl der Lamellen einen Bestandteil der Lamellenbremsvorrichtung. Bevorzugt sind die Lamellen und/oder das Lamellenpaket als Außenlamellen bzw. Außenlamellenpaket ausgebildet. Besonders bevorzugt weist die Lamellenbremsvorrichtung eine Mehrzahl an Innenlamellen und/oder ein Innenlamellenpaket auf, wobei die Innenlamellen bzw. das Innenlamellenpaket mit den Außenlamellen bzw. dem Außenlamellenpaket in Reibschluss treten können. Der Lamellenträger ist koaxial zu einer Hauptachse angeordnet und/oder definiert diese. Der Lamellenträger ist mit dem Hydraulikzylindergehäuse drehfest ausgebildet. Die Lamellen, insbesondere die Außenlamellen, sind in dem Lamellenträger, insbesondere ausgebildet als Außenlamellenträger, in Umlaufrichtung formschlüssig und in axialer Richtung zu der Hauptachse bewegbar und/oder verschiebbar angeordnet.

Der erste Hydraulikzylinderabschnitt und der Lamellenträger sind einer ersten Bremseinrichtung der Lamellenbremsvorrichtung zugeordnet. Optional bildet die erste Bremseinrichtung, insbesondere mit den Innenlamellen und den Außenlamellen, einen Bestandteil der Lamellenbremsvorrichtung.

Im Rahmen der Erfindung wird vorgeschlagen, dass der Lamellenträger als ein Blechlamellenträger ausgebildet ist. Insbesondere ist der Lamellenträger als ein Umformteil und/oder aus Stahl realisiert.

Während im bekannten Stand der Technik der Lamellenträger einteilig mit dem Hydraulikzylindergehäuse ausgebildet ist, wird abweichend davon vorgeschlagen, das Hydraulikzylindergehäuse und den Blechlamellenträger als zwei separate Bauteile oder Bauabschnitte auszubilden. Bei der aus dem Stand der Technik bekannten gemeinsamen Ausbildung in dem Hydraulikzylindergehäuse ist zum einen eine komplexe Geometrie darzustellen, so dass spezifische Werkzeuge und komplexe Fertigungsprozesse benötigt werden. Insbesondere muss die Integration des Lamellenträgers in das Hydraulikzylindergehäuse kostenintensiv umgesetzt werden, weil zudem sehr viel Zerspannungsarbeit notwendig wird. Ferner erfolgt durch die Abstützung des Bremsdrehmoments von den Lamellen an dem Hydraulikzylindergehäuse eine sehr hohe radiale Flächenpressung auf den Lamellenträger. Die Oberflächenhärte des Lamellenträgers muss somit besonders hoch sein, so dass die Lamellen sich nicht in den Lamellenträger eingraben. Eine unbeschichtete Oberfläche an dem aus einer Aluminiumlegierung gebildeten Hydraulikzylindergehäuse würde zu einem Verschleiß führen. Somit wäre eine Beschichtung des gesamten Hydraulikzylindergehäuses notwendig, wobei die Beschichtung die Herstellkosten weiter erhöhen würde.

Bei der erfindungsgemäßen, zweiteiligen Ausbildung der Lamellenbremsvorrichtung durch das Hydraulikzylindergehäuse aus der Aluminiumlegierung und durch den Blechlamellenträger, insbesondere aus Stahl, führt die erhöhte Oberflächenhärte des Blechlamellenträger dazu, dass das Hydraulikzylindergehäuse aus der Aluminiumlegierung nicht beschichtet werden muss, so dass bereits hierdurch ein Kostenvorteil gegeben ist. Ferner kann die Komplexität der Geometrie des Hydraulikzylindergehäuse reduziert werden, was zu weiteren Kostenvorteile führt.

Bei einer bevorzugten Ausgestaltung der Erfindung ist das Hydraulikzylindergehäuse umlaufend zu der Hauptachse ausgebildet. Insbesondere weist das Hydraulikzylindergehäuse eine zentrale Durchgangsöffnung zu Durchführung von mindestens einer Welle auf. Insbesondere ist das Hydraulikzylindergehäuse umlaufend durchgängig ausgebildet. Das Hydraulikzylindergehäuse wird stationär in einer Getriebeanordnung angeordnet. Insbesondere weist das Hydraulikzylindergehäuse mechanische Schnittstellen zur Anbindung in der Getriebeanordnung auf. Beispielsweise kann das Hydraulikzylindergehäuse umlaufend verteilt Aufnahmeöffnungen zur Aufnahme von Schrauben oder Bolzen aufweisen.

Bei einer bevorzugten Weiterbildung der Erfindung ist der mindestens eine Hydraulikzylinderabschnitt umlaufend zu der Hauptachse ausgebildet und/oder ist der erste Nehmerzylinder konzentrisch ausgebildet. Derartige konzentrische Nehmerzylinder werden auch als CSC (concentric slave cylinder) bezeichnet. Der entsprechende Hydraulikkolben ist als Ringkolben ausgebildet. Vorzugsweise dient der erste Hydraulikzylinderabschnitt zusammen mit dem ersten Hydraulikkolben zur hydraulischen Betätigung der ersten Bremseinrichtung der Lamellenbremsvorrichtung.

Erfindungsgemäß weist der Blechlamellenträger einen Bodenabschnitt auf, wobei der Bodenabschnitt in einer Radialebene zu der Hauptachse ausgerichtet ist. Der Blechlamellenträger ist über den Bodenabschnitt mit dem Hydraulikzylindergehäuse drehfest verbunden. Es ist möglich, dass der Blechlamellenträger über Formschlusselemente, wie zum Beispiel Nieten, mit dem Hydraulikzylindergehäuse verbunden ist. Der Blechlamellenträger kann auch am Hydraulikzylindergehäuse stoffschlüssig festgelegt, insbesondere verschweißt sein. Es ist jedoch besonders bevorzugt, wenn der Blechlamellenträger über Schraubverbindungen mit dem Hydraulikzylindergehäuse verbunden ist. Insbesondere wird der Blechlamellenträger an dem Hydraulikzylindergehäuse angeschraubt. Es ist bevorzugt vorgesehen, dass der Bodenabschnitt Befestigungsöffnungen zur Aufnahme von Schrauben aufweist und/oder dass das Hydraulikzylindergehäuse Gewindebohrungen zur Aufnahme der Schrauben aufweist.

Bei einer bevorzugten Weiterbildung der Erfindung weist der Blechlamellenträger einen Randabschnitt auf, wobei sich der Randabschnitt in axialer Richtung zu der Hauptachse erstreckt. Der Randabschnitt ist konturiert ausgebildet. Insbesondere zeigt dieser in Umlaufrichtung einen wellenförmigen oder zahnförmigen Verlauf. Es ist vorgesehen, dass die Lamellen, insbesondere die Außenlamellen, in Umlaufrichtung durch die konturierte Ausbildung des Wandabschnitts formschlüssig festgelegt sind, sich jedoch in axialer Richtung bewegen können.

Bei einer bevorzugten Weiterbildung der Erfindung weist das Hydraulikzylindergehäuse neben dem ersten integrierten Hydraulikzylinderabschnitt zu dem einen zweiten, dritten und vierten integrierten Hydraulikzylinderabschnitt auf. Es bevorzugt, dass jeweils zwei integrierte Hydraulikzylinderabschnitte auf einer Seite des Hydraulikzylindergehäuses angeordnet sind. Die weiteren drei integrierten Hydraulikabschnitte sind weiteren drei Nehmerzylindern zugeordnet. Optional bilden die Nehmerzylinder einen Bestandteil der Lamellenbremsvorrichtung. Durch diese Ausgestaltung werden die Funktionen der Lamellenbremsvorrichtung erweitert, wobei zugleich eine wirtschaftliche Fertigung möglich ist.

Ein weiterer Gegenstand der Erfindung wird durch eine Getriebeanordnung für ein Fahrzeug gebildet, wobei die Getriebeanordnung die Lamellenbremsvorrichtung aufweist, wie diese zuvor beschrieben wurde bzw. nach einem der vorhergehenden Ansprüche. Es ist vorgesehen, dass die Getriebeanordnung und/oder die Lamellenbremsvorrichtung der erste Bremseinrichtung umfasst. Der ersten Bremseinrichtung sind neben dem Blechlamellenträger und dem ersten Hydraulikzylinderabschnitt insbesondere der erste Hydraulikkolben, insbesondere der Ringkolben, die Innenlamellen und die Außenlamellen zugeordnet.

Bei einer Weiterbildung der Erfindung weist die Getriebeanordnung eine Schnittstelle zur Ankopplung von einem Verbrennungsmotor und eine Schnittstelle zur Ankopplung von einem Elektromotor auf. Optional umfasst die Getriebeanordnung dem Verbrennungsmotor und/oder den Elektromotor. In diesem Fall ist die Getriebeanordnung als ein Hybrid-Antriebsstrang ausgebildet. Ferner weist die Getriebeanordnung einen Planetengetriebeabschnitt zur Umsetzung der Antriebsmomente von dem Elektromotor und/oder von dem Verbrennungsmotor auf. Insbesondere ist der Planetengetriebeabschnitt als ein Dreigangstufenautomat ausgebildet. Der Planetengetriebeabschnitt weist ein Sonnenrad, einen Planetenträger mit Planetenrädern sowie ein Hohlrad auf. Die Planetenräder auf dem Planetenträger kämmen sowohl mit dem Sonnenrad als auch mit dem Hohlrad. Das Sonnenrad, der Planetenträger und das Hohlrad bilden jeweils Organe, insbesondere Eingangsorgane oder Ausgangsorgane, des Planetengetriebeabschnitts. Es ist vorgesehen, dass die erste Bremseinrichtung zur Bremsung eines der Organe getriebetechnisch angeordnet ist. Dadurch dass eines der Organe abgebremst oder blockiert wird, stellt sich zwischen den jeweils anderen beiden Organen des Planetengetriebeabschnitts ein definiertes Übersetzungsverhältnis ein.

Optional ist vorgesehen, dass die Lamellenbremsvorrichtung und/oder die Getriebeanordnung eine zweite Bremseinrichtung mit dem zweiten Nehmerzylinder aufweist. Die zweite Bremseinrichtung ist getriebetechnisch zur Bremsung eines weiteren, anderen Organs des Planetengetriebeabschnitts angeordnet. Dadurch dass eine anderes der Organe abgebremst oder blockiert wird, stellt sich zwischen den jeweils anderen beiden Organen des Planetengetriebeabschnitts ein definiertes weiteres Übersetzungsverhältnis ein.

Es kann ferner vorgesehen sein, dass die Lamellenbremsvorrichtung und/oder die Getriebeanordnung eine erste Kopplungseinrichtung mit dem dritten Nehmerzylinder und eine zweite Kupplungseinrichtung mit dem vierten Nehmerzylinder aufweist. Die erste Kopplungseinrichtung dient zur Ankopplung bzw. Abkopplung der Schnittstelle für den Verbrennungsmotor an die Getriebeanordnung. Die zweite Kopplungseinrichtung dient zur Ankopplung eines weiteren Organs des Planetengetriebeabschnitts. In dieser Ausgestaltung bildet das Hydraulikzylindergehäuse somit die Grundlage für vier unterschiedliche Nehmerzylinder aus.

Weitere Merkmale, Vorteile und Wirkung der Erfindung ergeben sich aus der nachfolgenden Beschreibung eines bevorzugten Ausführungsbeispiels der Erfindung sowie der beigefügten Figuren. Diese zeigen:
Figur 1 eine schematische dreidimensionale Darstellung einer Lamellenbremsvorrichtung als ein Ausführungsbeispiel der Erfindung;
Figur 2 einen schematischen Längsschnitt durch eine Getriebeanordnung mit der Lamellenbremsvorrichtung als ein weiteres Ausführungsbeispiel der Erfindung;
Figur 3 eine schematische, dreidimensionale und teilgeschnittene Darstellung der Lamellenbremsvorrichtung.

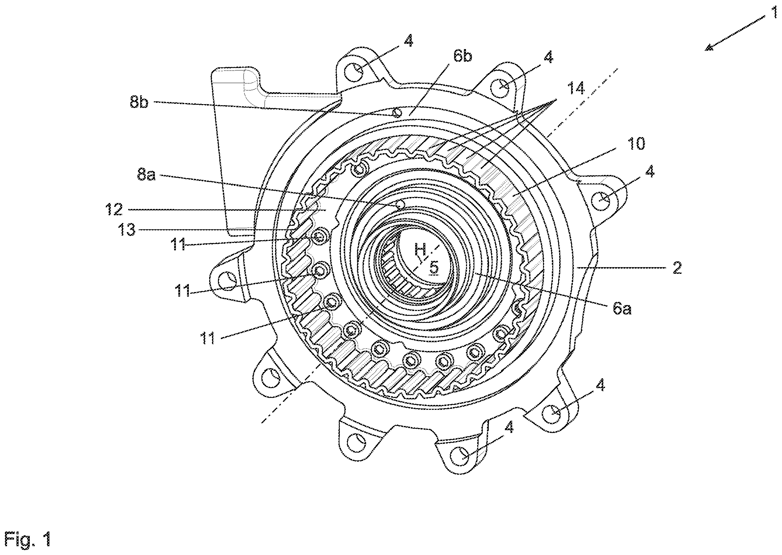

Die Figur 1 zeigt in einer schematischen dreidimensionalen Darstellung die wichtigsten Komponenten einer Lamellenbremsvorrichtung 1 als ein Ausführungsbeispiel der Erfindung.

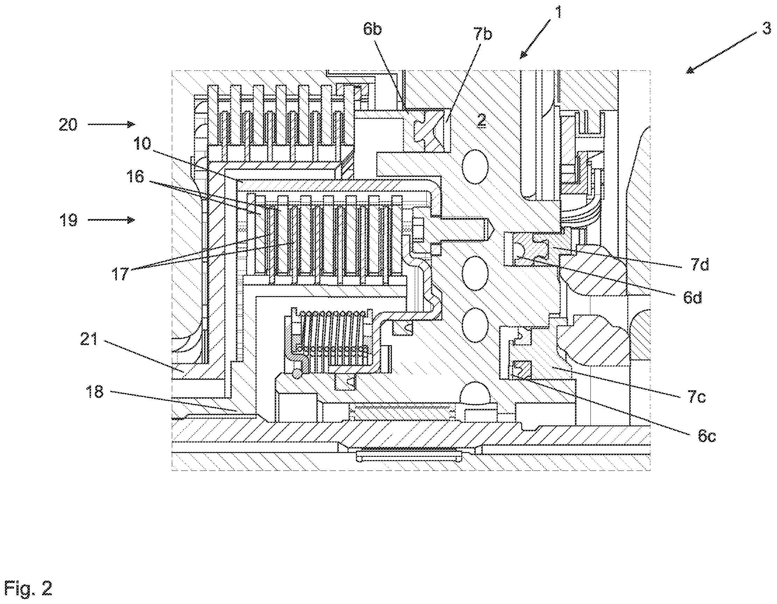

Die Lamellenbremsvorrichtung 1 weist ein Hydraulikzylindergehäuse 2 auf, welches aus einer Aluminiumlegierung gebildet ist. Insbesondere ist das Hydraulikzylindergehäuse 2 einstückig und/oder aus einem gemeinsamen Materialabschnitt ausgebildet. Das Hydraulikzylindergehäuse 2 ist in eine Getriebeanordnung 3, wie diese in der Figur 2 ausschnittsweise gezeigt ist, stationär angeordnet. Zur Integration in der Getriebeanordnung 3 weist das Hydraulikzylindergehäuse 2 eine Mehrzahl von mechanischen Schnittstellen auf, welche als Aufnahmeöffnungen 4 ausgebildet sind. Die Durchgangsöffnungen 4 sind in Umlaufrichtung um eine Hauptachse H regelmäßig verteilt und/oder sind randseitig angeordnet. Das Hydraulikzylindergehäuse 2 ist um die Hauptachse H umlaufend durchgängig ausgebildet und weist eine Durchgangsöffnung 5 auf, wobei die Durchgangsöffnung 5 koaxial zu der Hauptachse H angeordnet ist. Wie sich aus der Figur 2 ergibt, dient die Durchgangsöffnung 5 zur Durchführung von mindestens einer Welle

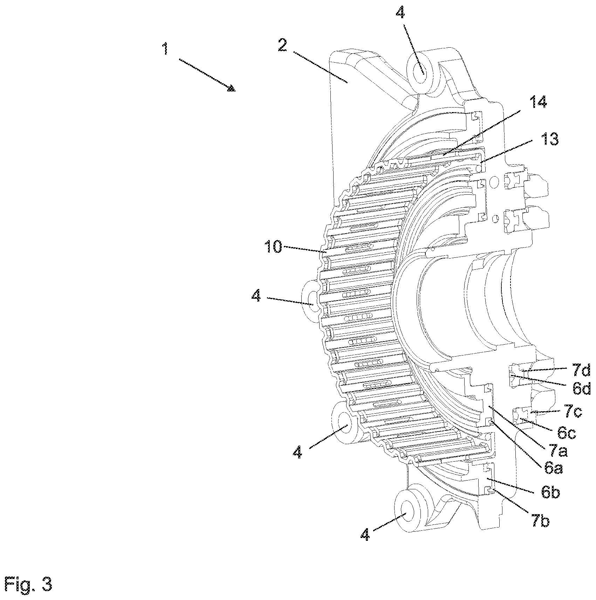

Das Hydraulikzylindergehäuse 2 weist eine Mehrzahl von integrierten Hydraulikzylinderabschnitten 6 a, b, c, d auf, wobei der erste und der zweite Hydraulikzylinderabschnitt 6 a, b auf der in der Figur 1 zugewandten Seite und der dritte und der vierte Hydraulikzylinderabschnitt 6 c, d auf der in der Figur 1 abgewandten Seite des Hydraulikzylindergehäuses 2 integral eingebracht sind. Die Hydraulikzylinderabschnitte 6 a, b, c, d sind jeweils als die Hauptachse H durchgängig umlaufende Nuten zur Aufnahme von Ringkolben 7 a, b, c, d ausgebildet, welche in der Figur 2 und 3 gezeigt sind. Die Hydraulikzylinderabschnitte 6 a, b, c, b bilden gemeinsam mit den Ringkolben 7 a, b, c, d Nehmerzylinder zur hydraulischen Betätigung der Lamellenbremsvorrichtung 1, insbesondere von Bremseinrichtungen sowie weiteren Kupplungseinrichtungen.

Die Hydraulikzylinderabschnitte 6a, b, c, d weisen jeweils mindestens oder genau eine Anschlussöffnung auf, wobei in den Figuren nur die Anschlussöffnungen 8 a, b für die Hydraulikzylinderabschnitte 6 a, b zu erkennen sind. Über die Anschlussöffnungen 8 a, b und weitere sind die Hydraulikzylinderabschnitte 6 a, b, c, d jeweils mit einem Geberzylinder verbunden, so dass die Nehmerzylinder hydraulisch betätigbar sind.

Die Lamellenbremsvorrichtung 1 weist ferner einen Blechlamellenträger 10 auf, wobei der Blechlamellenträger 10 koaxial zu der Hauptachse H angeordnet ist. Der Blechlamellenträger 10 ist drehfest mit dem Hydraulikzylindergehäuse 2 verbunden. Die Verbindung kann formschlüssig, kraftschlüssig oder stoffschlüssig ausgebildet sein. Bei diesem Ausführungsbeispiel weist der Blechlamellenträger 10 Befestigungsöffnungen auf, durch die axial verlaufende Befestigungsschrauben 11 geführt sind, welche in dem Hydraulikzylindergehäuse 2 eingeschraubt sind. Der Blechlamellenträger 10 weist einen Bodenabschnitt 12 auf, wobei der Bodenabschnitt 12 als eine Kreisringscheibe ausgebildet ist, welche sich in einer Radialebene zu der Hauptachse H erstreckt. In den Bodenabschnitt 12 sind die Befestigungsöffnungen für die Befestigungsschrauben 11 eingebracht. Der Blechlamellenträger 10 weist ferner einen Randabschnitt 13 auf, welcher in der Grobform als ein Hohlzylinder ausgebildet ist und sich koaxial und/oder konzentrisch zu der Hauptachse H erstreckt. Der Randabschnitt 13 schließt sich radial außen einstückig an den Bodenabschnitt 12 an. Der Blechlamellenträger 10 ist beispielsweise als ein Umformteil, insbesondere als ein Blechumformteil ausgebildet. Der Blechlamellenträger 10, insbesondere der Randabschnitt 13 weist eine Vielzahl in axialer Richtung verlaufende Führungsnuten 14 auf. Optional ergänzend können in den Führungsnuten 14 Fenster eingebracht sein, welche zur Kühlung und/oder Lüftung der Lamellenbremsvorrichtung 1 dienen.

Die Figur 2 zeigt eine Getriebeanordnung 3 mit der Lamellenbremsvorrichtung 1 als ein Ausführungsbeispiel der Erfindung. Insbesondere bildet die Getriebeanordnung 3 einen Hybridantrieb für ein Fahrzeug, wobei die Getriebeanordnung 3 mit mindestens oder genau einem Elektromotor und mit einem Verbrennungsmotor (nicht dargestellt) koppelbar ist. Die Getriebeanordnung 3 weist (ebenfalls nicht dargestellt) eine erste Kupplungseinrichtung zur An- oder Abkopplung des Verbrennungsmotors auf. Ferner weist die Getriebeanordnung 3 beispielsweise einen Planetengetriebeabschnitt auf, wobei der Planetengetriebeabschnitt drei Organe, nämlich ein Sonnenrad, ein Hohlrad und einen Planetenradträger umfasst. Auf dem Planetenträger ist eine Vielzahl von Planeten angeordnet, wobei die Planeten mit dem Hohlrad und mit dem Sonnenrad kämmen. Die Lamellenbremsvorrichtung 1 hat die Funktion, eines der Organe zu bremsen und insbesondere stationär zu setzen.

Der Blechlamellenträger 10 ist als ein Außenlamellenträger ausgebildet. Die Lamellenbremsvorrichtung 1 weist eine Mehrzahl von Außenlamellen 16 sowie Innenlamellen 17 auf, welche in axialer Richtung abwechselnd angeordnet sind. Die Außenlamellen 16 sind in dem Blechlamellenträger 10 durch die Führungsnuten 14 axial verschiebbar angeordnet, jedoch drehfest gehalten. Die Innenlamellen 17 sind drehfest auf einer ersten Welle 18 angeordnet. Die erste Welle 18 ist drehfest mit dem Organ des Planetengetriebeabschnitts verbunden. Durch die Lamellenbremsvorrichtung 1 kann somit das Organ des Planetengetriebeabschnitts abgebremst werden. Die Betätigung der Lamellenbremsvorrichtung 1 erfolgt durch den Nehmerzylinder, welcher durch den ersten Hydraulikzylinderabschnitt 6 a und den Ringkolben 7 a gebildet ist.

Der Vorteil dieser Ausgestaltung liegt darin, dass stark belastete Funktionsflächen zur Führung der Außenlamellen 16 in dem Blechlamellenträger 10 dargestellt sind. Optional ist der Blechlamellenträger 10 mindestens an dem belasteten Funktionsflächen oder sogar vollständig gehärtet und/oder carbonitriert. Dagegen ist das Hydraulikzylindergehäuse 2 aus einer Aluminiumlegierung hergestellt, welche - im Vergleich zu Stahl - als ein Leichtbauwerkstoff ausgebildet ist. Somit hat die Lamellenbremsvorrichtung 1 den Vorteil, dass die Funktionseigenschaften durch den Blechlamellenträger 10 sehr gut sind, die Baugruppe vergleichsweise leicht ist und kostengünstig hergestellt werden kann.

In der Figur 2 ist zu erkennen, dass die Lamellenbremsvorrichtung 1 eine erste Bremseinrichtung 19 und ergänzend eine zweite Bremseinrichtung 20 bildet. Die erste Bremseinrichtung 19 wird durch den Blechlamellenträger 10 sowie die Außenlamellen 16 und die Innenlamellen 17 gebildet. Die zweite Bremseinrichtung 20 wird über den Nehmerzylinder betätigt, welcher durch den Hydraulikzylinderabschnitt 6 b und den Ringkolben 7 b gebildet ist. Durch die erste Bremsienirchtung 19 kann wie beschrieben das erste Organ des Planetengetriebeabschnitts gebremst werden, durch die zweite Bremseinrichtung 20 kann ein zweites Organ des Planetengetriebeabschnitts gebremst werden. Das zweite Organ des Planetengetriebeabschnitts ist über eine zweite Welle 21 an die zweite Bremseinrichtung 20 angebunden. Die zweite Bremseinrichtung 20 ist ebenfalls als eine Lamellenbremse ausgebildet.

Ferner sind in der Figur 2 die Hydraulikzylinderabschnitte 6 c, d sowie die Ringkolben 7 c, d zu erkennen. Der Hydraulikzylinderabschnitt 6 c bildet zusammen mit dem Ringkolben 7 c einen dritten Nehmerzylinder für eine erste Kupplungseinrichtung, der Hydraulikzylinderabschnitt 6 d bildet zusammen mit dem Ringkolben 7 d einen vierten Nehmerzylinder für eine zweite Kupplungseinrichtung. Eine der Kupplungseinrichtungen trennt den Verbrennungsmotor, die andere Kopplungseinrichtung trennt ein weiteres Organ des Planetengetriebeabschnitts.

Die Figur 3 zeigt die Lamellenbremsvorrichtung 1 in einer schematischen, dreidimensionalen und teilgeschnittene Darstellung. In dieser Darstellung ist der erste Nehmerzylinder umfassend den ersten Hydraulikzylinderabschnitt 6 a und den Ringkolben 7 a, der zweite Nehmerzylinder umfassend den zweiten Hydraulikzylinderabschnitt 6 b und den Ringkolben 7 b, der dritte Nehmerzylinder umfassend den dritten Hydraulikzylinderabschnitt 6 c und den Ringkolben 7 c und der vierte Nehmerzylinder umfassend den vierten Hydraulikzylinderabschnitt 6 d und den Ringkolben 7 d deutlich zu erkennen. Ferner ist nochmals zu sehen, dass der Blechlamellenträger 10 auf das Hydraulikzylindergehäuse 2 aufgesetzt ist.

### Bezugszeichenliste

- 1: Lamellenbremsvorrichtung
- 2: Hydraulikzylindergehäuse
- 3: Getriebeanordnung
- 4: Aufnahmeöffnungen
- 5: Durchgangsöffnung
- 6a,b,c,d: Hydraulikzylinderabschnitte
- 7a, b, c, d: Ringkolben
- 8a, b: Anschlussöffnungen
- 9: leer
- 10: Blechlamellenträger
- 11: Befestigungsschrauben
- 12: Bodenabschnitt
- 13: Randabschnitt
- 14: Führungsnuten
- 15: Getriebeanordnung
- 16: Außenlamellen
- 17: Innenlamellen
- 18: erste Welle
- 19: erste Bremseinrichtung
- 20: zweite Bremseinrichtung
- 21: zweite Welle

- H: Hauptachse

## Patentansprüche

1. Lamellenbremsvorrichtung (1)
mit einem Hydraulikzylindergehäuse (2), wobei das Hydraulikzylindergehäuse (2) mindestens einen integrierten ersten Hydraulikzylinderabschnitt (6a) aufweist, welcher einem ersten Nehmerzylinder zugeordnet ist,
mit einem Lamellenträger (10) zur Aufnahme einer Mehrzahl von Lamellen, wobei der Lamellenträger (10) koaxial zu einer Hauptachse (H) angeordnet ist und wobei der Lamellenträger (10) mit dem Hydraulikzylindergehäuse (2) drehfest ausgebildet ist,
wobei der erste Hydraulikzylinderabschnitt (6a) und der Lamellenträger (10) einer ersten Bremseinrichtung (19) der Lamellenbremsvorrichtung (1) zugeordnet sind,
und wobeider Lamellenträger als ein Blechlamellenträger (10) ausgebildet ist,
**dadurch gekennzeichnet, dass**
das Hydraulikzylindergehäuse (2) aus einer Aluminiumlegierung gebildet ist und der Lamellenträger (10) einen Bodenabschnitt (12) aufweist, wobei der Bodenabschnitt (12) in einer Radialebene zu der Hauptachse (H) ausgerichtet ist und wobei der Bodenabschnitt (12) über Schraubverbindungen, Nieten oder durch Verschweißung mit dem Hydraulikzylindergehäuse (2) drehfest verbunden ist.

2. Lamellenbremsvorrichtung (1) nach Anspruch 1, **dadurch gekennzeichnet, dass** das Hydraulikzylindergehäuse (2) umlaufend zu der Hauptachse (H) ausgebildet ist.

3. Lamellenbremsvorrichtung (1) nach Anspruch 1, **dadurch gekennzeichnet, dass** der erste Hydraulikzylinderabschnitt (6a) umlaufend zu der Hauptachse (H) ausgebildet ist und/oder dass der erste Nehmerzylinder konzentrisch ausgebildet ist..

4. Lamellenbremsvorrichtung (1) nach einem der vorhergehenden Ansprüche, **dadurch gekennzeichnet, dass** der Blechlamellenträger (10) einen Randabschnitt (13) aufweist, wobei sich der Randabschnitt (13) in axialer Richtung zu der Hauptachse (H) erstreckt und wobei der Randabschnitt (13) konturiert ausgebildet ist, so dass die Lamellen in Umlaufrichtung formschlüssig festgelegt werden können und in axialer Richtung verschoben werden können.

5. Lamellenbremsvorrichtung (1) nach einem der vorhergehenden Ansprüche, **dadurch gekennzeichnet, dass** das Hydraulikzylindergehäuse (2) mindestens einen zweiten, einen dritten und einen vierten integrierten Hydraulikzylinderabschnitt (6b,c,d) aufweist, welche einem zweiten, dritten und vierten Nehmerzylinder zugeordnet sind.

6. Getriebeanordnung (3) für ein Fahrzeug, **gekennzeichnet durch** eine Lamellenbremsvorrichtung (1) nach einem der vorhergehenden Ansprüche, wobei die Lamellenbremsvorrichtung (1) die erste Bremseinrichtung (19) umfasst.

7. Getriebeanordnung (3) nach Anspruch 8, **dadurch gekennzeichnet dass** die Getriebeanordnung (3) eine Schnittstelle zur Ankopplung von einem Verbrennungsmotor und eine Schnittstelle zur Ankopplung von einem Elektromotor aufweist sowie einen Planetengetriebeabschnitt zur Umsetzung der Antriebsmomente von dem Elektromotor und/oder von dem Verbrennungsmotor aufweist mit einem Sonnenrad, einem Planetenträger sowie einem Hohlrad als Organe des Planetengetriebeabschnitts, wobei die erste Bremseinrichtung (19) zur Bremsung einer der Organe getriebetechnisch angeordnet ist.

8. Getriebeanordnung (3) nach Anspruch 7, **dadurch gekennzeichnet, dass** die Lamellenbremsvorrichtung (1) und/oder die Getriebeanordnung (3) eine zweite Bremseinrichtung (20) mit dem zweiten Nehmerzylinder aufweist, wobei die zweite Bremseinrichtung (20) zur Bremsung eines weiteren Organs des Planetengetriebeabschnitts getriebetechnisch angeordnet ist und wobei die zweite Bremseinrichtung (20) konzentrisch zu der ersten Bremseinrichtung (19) angeordnet ist.

9. Getriebeanordnung (3) nach einem der Ansprüche 6 bis 8, **dadurch gekennzeichnet, dass** die Lamellenbremsvorrichtung (1) und/oder die Getriebeanordnung (3) eine erste Kupplungseinrichtung mit dem dritten Nehmerzylinder und eine zweite Kupplungseinrichtung mit dem vierten Nehmerzylinder aufweist, wobei die erste Kupplungseinrichtung zur Kupplung der Schnittstelle für den Verbrennungsmotor und die zweite Kupplungseinrichtung zur Ankopplung eines weiteren Organs des Planetengetriebeabschnitts ausgebildet ist.

## Claims

1. A multiple disc brake device (1)
having a hydraulic cylinder housing (2), wherein the hydraulic cylinder housing (2) has at least one integrated first hydraulic cylinder section (6a), which is assigned to a first slave cylinder,
having a multiple disc carrier (10) for receiving a plurality of discs, wherein the multiple disc carrier (10) is arranged coaxially to a main axis (H) and wherein the multiple disc carrier (10) is designed to be non-rotatable with the hydraulic cylinder housing (2),
wherein the first hydraulic cylinder section (6a) and the multiple disc carrier (10) are assigned to a first brake device (19) of the multiple disc brake device (1),
and wherein the multiple disc carrier is designed as a multiple sheet metal disc carrier (10),
**characterised in that**
the hydraulic cylinder housing (2) is formed from an aluminium alloy and the multiple disc carrier (10) has a base section (12), wherein the base section (12) is aligned in a radial plane to the main axis (H) and wherein the base section (12) is connected to the hydraulic cylinder housing (2) in a non-rotatable manner via screw connections, rivets or by welding.

2. The multiple disc brake device (1) according to claim 1, **characterized in that** the hydraulic cylinder housing (2) is formed circumferentially with respect to the main axis (H).

3. The multiple disc brake device (1) according to claim 1, **characterized in that** the first hydraulic cylinder section (6a) is formed circumferentially with respect to the main axis (H) and/or **in that** the first slave cylinder is formed concentrically.

4. The multiple disc brake device (1) according to any one of the preceding claims, **characterized in that** the multiple sheet metal disc carrier (10) has an edge section (13), wherein the edge section (13) extends in the axial direction to the main axis (H) and wherein the edge section (13) is designed as contoured, so that the discs can be fixed in a form-fitting manner in the direction of rotation and can be displaced in the axial direction.

5. The multiple disc brake device (1) according to any one of the preceding claims, **characterized in that** the hydraulic cylinder housing (2) has at least a second, a third and a fourth integrated hydraulic cylinder section (6b, c, d), which are assigned to a second, third and fourth slave cylinder.

6. A transmission arrangement (3) for a vehicle, **characterized by** a multiple disc brake device (1) according to any one of the preceding claims, wherein the multiple disc brake device (1) comprises the first brake device (19).

7. The transmission arrangement (3) according to claim 8, **characterized in that** the transmission arrangement (3) has an interface for coupling an internal combustion engine and an interface for coupling an electric motor and has a planetary gear section for converting the drive torques from the electric motor and/or from the internal combustion engine, with a sun gear, a planet carrier and a ring gear as elements of the planetary gear section, wherein the first brake device (19) is arranged transmission-wise for braking one of the elements.

8. The transmission arrangement (3) according to claim 7, **characterized in that** the multiple disc brake device (1) and/or the transmission arrangement (3) has a second brake device (20) with the second slave cylinder, wherein the second brake device (20) is arranged transmission-wise for braking a further element of the planetary gear section and wherein the second brake device (20) is arranged concentrically to the first brake device (19).

9. The transmission arrangement (3) according to any one of claims 6 to 8, **characterized in that** the multiple disc brake device (1) and/or the transmission arrangement (3) has a first coupling device with the third slave cylinder and a second coupling device with the fourth slave cylinder, wherein the first coupling device is designed to couple the interface for the internal combustion engine and the second coupling device is designed to couple a further element of the planetary gear section.

## Revendications

1. Dispositif de frein à disques multiples (1)
comportant un boîtier de vérin hydraulique (2), le boîtier de vérin hydraulique (2) présentant au moins une première section de vérin hydraulique (6a) intégrée qui est associée à un premier vérin récepteur,
comportant un support de disques (10) pour recevoir une pluralité de disques, le support de disques (10) étant disposé coaxialement à un axe principal (H) et le support de disques (10) étant conçu pour être bloqué en rotation avec le boîtier de vérin hydraulique (2),
la première section de vérin hydraulique (6a) et le support de disques (10) étant associés à un premier dispositif de freinage (19) du dispositif de frein à disques multiples (1),
et le support de disques étant conçu comme un support de disques en tôle (10),
**caractérisé en ce que**
le boîtier de vérin hydraulique (2) est constitué d'un alliage d'aluminium et le support de disques (10) présente une section de base (12), la section de base (12) étant alignée dans un plan radial par rapport à l'axe principal (H) et la section de base (12) étant reliée bloquée en rotation par des raccords à vis, des rivets ou par soudure au boîtier de vérin hydraulique (2).

2. Dispositif de frein à disques multiples (1) selon la revendication 1, **caractérisé en ce que** le boîtier de vérin hydraulique (2) est conçu pour s'étendre tout autour de l'axe principal (H).

3. Dispositif de frein à disques multiples (1) selon la revendication 1, **caractérisé en ce que** la première section de vérin hydraulique (6a) est conçue pour s'étendre tout autour de l'axe principal (H) et/ou que le premier cylindre récepteur est conçu pour être concentrique.

4. Dispositif de frein à disques multiples (1) selon l'une des revendications précédentes, **caractérisé en ce que** le support de disques en tôle (10) présente une section de bord (13), la section de bord (13) s'étendant en direction axiale jusqu'à l'axe principal (H) et la section de bord (13) étant profilée de telle sorte que les disques peuvent être fixés par complémentarité de forme dans la direction circonférentielle et peuvent être déplaces dans la direction axiale.

5. Dispositif de frein à disques multiples (1) selon l'une des revendications précédentes, **caractérisé en ce que** le boîtier de vérin hydraulique (2) présente au moins une deuxième, une troisième et une quatrième section de vérin hydraulique (6b, c, d) intégrée, qui sont associées à un deuxième, un troisième et un quatrième cylindre récepteur.

6. Ensemble de transmission (3) pour un véhicule, **caractérisé par** un dispositif de frein à disques multiples(1) selon l'une des revendications précédentes, le dispositif de frein à disques multiples (1) comprenant le premier dispositif de freinage (19).

7. Ensemble de transmission (3) selon la revendication 8, **caractérisé en ce que** l'ensemble de transmission (3) présente une interface pour accoupler un moteur à combustion interne et une interface pour accoupler un moteur électrique et présente une section d'engrenage planétaire pour convertir les couples d'entraînement du moteur électrique et/ou du moteur à combustion interne, à l'aide d'un pignon planétaire, d'un porte-satellites et d'une couronne dentée comme organes de la section d'engrenage planétaire, le premier dispositif de freinage (19) étant conçu en termes de technologie de transmission pour freiner l'un des organes.

8. Ensemble de transmission (3) selon la revendication 7, **caractérisé en ce que** le dispositif de frein à disques multiples (1) et/ou l'ensemble de transmission (3) présentent un deuxième dispositif de freinage (20) comportant le deuxième cylindre récepteur, le deuxième dispositif de freinage ( 20) étant conçu en termes de technologie de transmission pour freiner un autre organe de la section d'engrenage planétaire et le deuxième dispositif de freinage (20) est conçu pour être concentrique par rapport au premier dispositif de freinage (19).

9. Ensemble de transmission (3) selon l'une des revendications 6 à 8, **caractérisé en ce que** le dispositif de frein à disques multiples (1) et/ou l'ensemble de transmission (3) présentent un premier dispositif d'embrayage comportant le troisième cylindre récepteur et un second dispositif d'embrayage comportant le quatrième cylindre récepteur, le premier dispositif d'embrayage étant conçu pour accoupler l'interface pour le moteur à combustion interne et le second dispositif d'embrayage pour accoupler un autre organe de la section d'engrenage planétaire.
